# EUROPEAN PATENT APPLICATION

(11) **EP 4 001 953 A1**
(43) Date of publication of application: **25.05.2022**
(21) Application number: 20206994.4
(22) Date of filing: 11.11.2020
(51) Int. Cl.: G01S 7/02, G01S 13/931

(54) **AUTOMOTIVE RADAR SYSTEM**

(71) Applicant: Aptiv Technologies Limited, St. Michael (BB)
(72) Inventor: VOLLBRACHT, Dennis, 40699 Erkrath (DE); TORRES, Felipe, 40723 Hilden (DE)
(74) Representative: Manitz Finsterwald Patent- und Rechtsanwaltspartnerschaft mbB

(57) **Abstract**

An automotive radar system for detecting target objects in a traffic scene comprises at least one transmit antenna, at least one receive antenna, and a radar circuit connected to the at least one transmit and receive antenna. The transmit antenna is configured to transmit the transmit radar signal having variable polarization. A logic unit of the radar system is configured to receive information on a full polarization state of an incoming radar signal emitted by at least one other radar device located within the traffic scene and the logic unit is configured to determine a transmit polarization state that has maximum isolation from the polarization state of the at least one incoming radar signal. The radar circuit is configured to adjust a polarization of the transmit radar signal transmitted via the at least one transmit antenna to match the determined transmit polarization state.

## Description

### FIELD

The present disclosure relates to an automotive radar system, a vehicle with an automotive radar system and a method for operating an automotive radar system.

### BACKGROUND

Radar systems are used in automotive applications to detect and locate target objects such as other vehicles, obstacles or lane boundaries. They may be placed at the front, at the rear or at the sides of a vehicle. Such radar devices usually comprise a radar circuit to generate a radar signal and an antenna device for illuminating the target objects with the radar signal and for capturing target reflection of the radar signal reflected back from the target objects. The received target reflections are subsequently analyzed by the radar circuit to detect and/or classify the target objects. The information extracted from the reflected radar signal may then be used for advanced driver's assist system (ADAS) functions, such as emergency brake assist, adaptive cruise control, lane change assist or the like.

Due to the growing market penetration of radar-based assist and comfort functions the number of radar sensors working simultaneously in a dynamic traffic scene has increased significantly. Since all automotive radar systems operate within officially regulated frequency bands, multiple radar devices operating simultaneously in such dynamic traffic scenes easily interfere with each other. Interference may, for example, occur between front radars of vehicles approaching each other or generally between devices that are at a short distance with respect to each other.

Mutual interference between radar devices may lead to overdriving and saturation of receive units of the respective radar devices and high harmonics generation within these receive units. Furthermore, the noise floor may increase, which reduces the dynamic range of possible radar detections. Interference between different radar devices may also generate ghost targets.

Accordingly, there is a need to mitigate interference of multiple automotive radar devices.

### SUMMARY

The present disclosure provides an automotive radar system, a vehicle with an automotive radar system and a method for operating an automotive radar system according to the independent claims. Embodiments are given in the dependent claims, the description and the drawings.

In one aspect, the present disclosure is directed at an automotive radar system for detecting target objects in a traffic scene, wherein the radar system comprises at least one transmit antenna for illuminating the target objects with a transmit radar signal, at least one receive antenna for receiving target reflections of the transmit radar signal, and a radar circuit connected to the at least one transmit and receive antenna. The transmit antenna is configured to transmit the transmit radar signal having variable polarization. A logic unit of the radar system is configured to receive information on a full polarization state of an incoming radar signal emitted by at least one other radar device located within the traffic scene and the logic unit is configured to determine a transmit polarization state that has maximum isolation from the polarization state of the at least one incoming radar signal. The radar circuit is configured to adjust a polarization of the transmit radar signal transmitted via the at least one transmit antenna to match the determined transmit polarization state.

By providing a transmit antenna that is configured to transmit with variable polarization and by adjusting the polarization of the transmitted radar signal to have maximum isolation from the polarization state of an incoming radar signal, interference of the incoming radar signal with the radar system is avoided. This avoids a degradation of the signal-to-noise ratio of target reflections received by the receive antenna of the radar device and avoids detecting ghost targets that are created due to the presence of the incoming radar signal within the traffic scene. In total, the radar system is thus configured to variably adjust its ego polarization based on the polarization state of the incoming and possibly interfering radar signal to avoid interference.

The radar system may comprise a single transmit antenna or it may comprise an arrangement of transmit antennas. Each of these antennas may be configured as a fully polarimetric transmit antenna that is configured to transmit its respective transmit radar signal with any possible polarization including linear, elliptical and circular polarization. The individual transmit antennas may be configured to transmit their respective transmit radar signal as a coherent superposition of two orthogonal polarization states, whereby the orthogonal polarization states may be vertical and horizontal linear polarization, ± 45° linear polarization or left-hand circular (LHC) and right-hand circular (RHC) polarization. To vary the resulting polarization of the transmitted superpositions, the orthogonal polarization states may be transmitted with variable relative phase offset and/or variable relative amplitude difference.

Likewise, the radar system may comprise a single receive antenna or it may comprise an arrangement of receive antennas. Each of these receive antennas may be configured as a fully polarimetric receive antenna that is configured to decompose a received incoming radar signal into two orthogonal polarization components, for example into components with vertical and horizontal linear polarization, components with ± 45° linear polarization or components with left-hand circular (LHC) and right-hand circular (RHC) polarization.

The individual transmit antennas and/or the individual receive antennas may each comprise one radiating element or a multitude of radiating elements. The individual antennas may, for example, comprise arrays of serially-fed radiating elements. The individual antennas may be configured as patch antennas, such as differentially-fed patch antennas, slot antennas or the like.

The information on the full polarization state of the incoming radar signal, which is received by the logic unit, includes all information to establish a location of the polarization state on the Poincare sphere or to reconstruct a polarization ellipse of the polarization state, respectively. Therefore, the information on the full polarization state received by the logic unit may be represented in multiple ways, including three polarization dependent Stokes parameters, complex amplitudes of a decomposition of the full polarization state into orthogonal polarization components (Jones vector), the axial ratio and tilt angle of the corresponding polarization ellipse, the orientation angle and ellipticity of the corresponding polarization ellipse, Deschamps parameters, or the like.

The logic unit may receive the information on the full polarization state of the incoming radar signal directly from the other radar device, for example via a communication link between the radar device and the logic unit. Additionally or alternatively, the logic unit may receive the information on the full polarization state from the radar circuit of the radar device after the radar circuit has evaluated the incoming radar signal received by the at least one receive antenna. For example, the radar circuit may be configured to analyze the decomposition of the incoming radar signal into the two orthogonal polarization components by the receive antenna and to determine the full polarization state of the incoming radar signal from this decomposition.

The logic unit of the radar system may be placed together with the transmit and receive antennas and the radar circuit in a vehicle. Alternatively, the logic unit may be placed in another vehicle or at a stationary location, whereby the logic unit is connected to the radar circuit and possibly to the other radar devices via a communication link. Such a communication link may be, for example, a wireless communication link, for example for vehicle-to-vehicle communication.

For the transmit polarization state having maximum isolation from the polarization state of the incoming radar signal, the logic unit may determine the transmit polarization state as being orthogonal to the polarization state of the incoming radar signal or as being orthogonal to a reference polarization that depends on the polarization state of the incoming radar signal and, in the case of multiple interfering radar devices, on the polarization states of all other incoming radar signals. Such a reference polarization may, for example, be an average polarization of all incoming radar signals. This allows to determine the transmit polarization even in cases, in which more than one other radar device is present in the traffic scene.

The logic unit may determine the transmit polarization state using a machine learning algorithm, such as a neural net or a support vector machine. The polarization states of all incoming radar signals may be fed to the machine learning algorithm as components of a feature vector processed by the machine learning algorithm.

To adjust the polarization of the transmitted radar signal, the radar circuit may adjust a relative phase offset and/or a relative amplitude difference between two transmit radar signals that are radiated with orthogonal polarization by the transmit antenna. In the case of multiple transmit antennas, the radar circuit may be configured to correspondingly adjust transmit radar signals for each individual transmit antenna.

With a radar device having an arrangement of transmit antennas, the radar circuit may create the same transmit polarization at all transmit antennas, for example for performing a multiple input multiple output (MIMO) function or a beam steering function of the radar device. Thereby, the transmit signals of the individual transmit antennas may differ in additional signal parameters, such as frequency and/or phase and/or chirp or the like. For example, the transmit signals of the individual transmit antennas may exhibit different separability parameters, for example phase codes, to distinguish their contributions to individual target reflections received by a multitude of receive antennas.

The radar system may be configured as a monostatic radar system, which has an antenna device that comprises both the at least one transmit antenna or the arrangement of transmit antennas and the at least one receive antenna or the arrangement of receive antennas. All transmit antennas and all receive antennas may be placed on the same antenna surface of the antenna device. The radar system may operate in a frequency range between 10 GHz and 200 GHz, for example in a frequency range between 21 GHz and 26 GHz, such as between 24 GHz and 24.25 GHz, or in a frequency range between 76 GHz and 81 GHz, such as between 76 GHz and 77 GHz or 77 GHz and 81 GHz.

The radar circuit of the radar device may be configured as a single integrated circuit or it may comprise several integrated circuits. Each integrated circuit may be configured as a microwave integrated circuit that routes high-frequency portions, such as microwave portions, of the radar signals on-chip. The individual integrated circuits may be configured as monolithic microwave integrated circuits (MMICs). Signal ports that connect the radar circuit to the individual transmit and receive antennas may be configured as external connection points of the integrated circuits.

With the radar system according to the present disclosure, the at least one transmit antenna transmits the transmit radar signal having variable polarization. The logic unit of the radar system receives information on the full polarization state of the incoming radar signal emitted by the at least one other radar device located within the traffic scene and the logic unit determines the transmit polarization state that has maximum isolation from the polarization state of the at least one incoming radar signal. The radar circuit adjusts the polarization of the transmit radar signal transmitted via the at least one transmit antenna to match the determined transmit polarization state.

To this end, radar system may be configured by processing instructions, for example stored within control units of the radar circuit and/or the logic unit, to transmit the transmit radar signal with variable polarization. Furthermore, the logic unit may be configured by processing instructions stored within the logic unit, to receive the full polarization state of the incoming radar signal and to determine the transmit polarization state. The radar circuit may be configured, for example by processing instructions stored within the radar circuit and/or the logic unit, to adjust the polarization of the transmit radar signal transmitted via the at least one transmit antenna to match the determined transmit polarization state.

According to an embodiment, the logic unit is configured, for example by processing instructions stored within the logic unit, to determine the transmit polarization state such that a distance between a location of the transmit polarization on the Poincare sphere and a reference location defined by the polarization state of the at least one incoming radar signal is maximized. In the case of a multitude of interfering radar devices, the reference location may be the location of the reference polarization that depends on the polarization states of all incoming radar signals.

Determining the transmit polarization state by maximizing the distance on the Poincare sphere allows for using graphical modelling and representation techniques for determining the ego polarization of the radar device in complex interference scenarios. The logic unit may therefore be configured, for example by processing instructions stored within the logic unit, to process the full polarization states of the incoming radar signals as a pattern of individual locations on the Poincare sphere, for example using a pattern recognition algorithm, such as a machine learning pattern recognition algorithm.

According to an embodiment, the location of the transmit polarization state and the reference location lie opposite to each other on the Poincare sphere with respect to the center of the Poincare sphere. Since opposing locations on the Poincare sphere correspond to orthogonal polarization states, the transmit polarization state is thereby orthogonal to the reference location, which maximizes polarization isolation. In the case of a single interfering radar device, the reference location may amount to the polarization state of the incoming radar signal radiated by the radar device.

According to an embodiment, the logic unit is configured, for example by for example by processing instructions stored within the logic unit, to receive information on full polarization states of a multitude of incoming radar signals that are emitted by multiple other radar devices within the traffic scene and the logic unit is configured, for example by processing instructions stored within the logic unit, to determine the transmit polarization state having maximum isolation from an entirety of the polarization states of the multitude of incoming radar signals. This allows adjustment of the ego polarization of the radar device even in the presence of a multitude of interfering radar devices.

To determine the transmit polarization state from the entirety of the polarization states of all incoming radar signals, the logic unit may determine a reference polarization that depends on the polarization states of all incoming radar signals. The logic unit may process the reference polarization as the reference location on the Poincare sphere. The logic unit may process the information on the polarization states of all incoming radar signals, for example with a machine learning algorithm. The information on the individual polarization states may thereby be provided as Jones vectors, Stokes parameters, polarization ellipse parameters, or the like.

According to an embodiment, the maximum isolation from the entirety of the polarization states corresponds to a maximum isolation from an average of the polarization states of the incoming radar signals. This allows to maximize the mutual isolation between the transmit polarization state and the individual polarization states of the incoming radar signals. The average may, for example, be an arithmetic average.

According to an embodiment, the average is a weighted average, wherein weights of the individual polarization states depend on one or several signal parameters of the incoming radar signals. For each incoming radar signal, these signal parameters may comprise, for example, a frequency of the respective incoming radar signal, a frequency difference between the respective incoming radar signal and the transmit radar signal, an amplitude of the respective incoming radar signal, a bandwidth of the respective incoming radar signal, a distance to the other radar device emitting the respective incoming radar signal, an angular position of the other radar device emitting the respective incoming radar signal, a velocity of the other radar device emitting the respective incoming radar signal and a modulation scheme such as a frequency modulation, amplitude modulation, phase modulation or the like. Using a weighted average, it is possible to increase isolation between the transmit polarization state and polarization states of incoming radar signals that have a larger influence on the performance of the radar device at the cost of decreasing isolation between the transmit polarization state and polarization states of incoming radar signals that have less influence on the performance of the radar device.

For example, the weights for radar signals that differ by a smaller frequency difference from the frequency of the transmit radar signal than other radar signals may be larger than the weights for the other radar signals. Furthermore, the weights for the individual radar signals may be proportional to their signal amplitude received by the at least one receive antenna. Weights for radar signals that have a larger overlap in bandwidth with the transmit radar signal than other radar signals may be larger than weights for the other radar signals.

Weights for radar signals emitted by radar devices positioned at larger distances to the antennas of the radar system may be smaller than weights for radar signals emitted by radar devices positioned at smaller distances to the antennas of the radar system. Weights for radar signals emitted by radar devices positioned at central angular positions may be larger than weights for radar signals emitted by radar devices positioned at peripheral angular positions and weights for radar signals emitted by radar devices approaching the antennas of the radar system may be larger than weights for radar signals emitted by radar devices that move away from the antennas of the radar system.

According to an embodiment, the transmit antenna is configured to transmit the radar signal as a coherent superposition of a first transmit radar signal having a first transmit polarization and a second transmit radar signal having a second transmit polarization that is different from the first transmit polarization, wherein the radar circuit is configured, for example by processing instructions stored within the control unit of the radar circuit and/or logic unit, to adjust the polarization of the transmit radar signal by coherently generating the first transmit radar signal and the second transmit radar signal and by simultaneously and coherently transmitting the first and second transmit radar signal via the transmit antenna. With such a radar system, it is possible to realize a fully polarimetric antenna that is configured to generate any polarization state on the Poincare sphere.

The transmit antenna or, in the case of several transmit antennas, the each individual transmit antenna may be configured as a dual-port antenna that receives its respective first radar signal as a first feed signal and its respective second radar signal as a second feed signal. The transmit antenna or each transmit antenna may be configured to radiate the first radar signals having the first transmit polarization and the second radar signals having the second transmit polarization. In the case of multiple transmit antennas, all transmit antennas may be configured to transmit with the same first transmit polarization and/or with the same second transmit polarization. The respective first and second transmit polarizations may be orthogonal. The transmit polarization may be linear, circular or elliptic.

Each individual transmit antenna may be configured to transmit their respective first and second transmit radar signals having a common phase center, wherein the common phase centers differ among the individual transmit antennas. Due to the common phase centers of the transmit antennas, the first and second transmit radar signals are radiated from the same position at the individual transmit antennas. This allows, for example, for a well-defined directional emission of a superposition of first and second transmit radar signals when operating the arrangement of transmit antennas as a phased array. Furthermore, it allows establishing an unambiguous phase center of the superposition of the first and second transmit radar signal, for example for MIMO applications.

According to an embodiment, the radar circuit is configured, for example by processing instructions stored within the control unit of the radar circuit and/or the logic unit, to vary the transmit polarization of the transmitted radar signal between non-orthogonal polarization states, for example between elliptic and linear polarization. This allows for flexible adaption of the transmit polarization. Non-orthogonal polarization states may, for example, be created by generating corresponding sets of first and second transmit radar signals with amplitude and phase values that correspond to non-orthogonal Jones vectors.

According to an embodiment, the radar circuit is configured to evaluate the at least one incoming radar signal after reception by the at least one receive antenna and to measure the full polarization state of the at least one incoming radar signal. To this end, corresponding processing instructions may be stored within the control unit of the radar circuit and/or within the logic unit. The logic unit is then configured, for example by processing instructions stored within the logic unit, to receive the information on the full polarization state from the radar circuit. This allows measurement of the full polarization state of the incoming radar signal and determination of the transmit polarization state locally within a radar device that is mounted to a vehicle and that comprises the transmit and receive antenna and the radar circuit.

According to an embodiment, the receive antenna is configured to separate the incoming radar signal received from the at least one other radar device into a first signal portion having a first receive polarization and into second signal portion having a second receive polarization that is different from the first receive polarization. The radar circuit is configured to measure the full polarization state of the incoming radar signal by coherently evaluating the first and second signal portion, for example due to corresponding processing instructions stored within the control unit of the radar circuit and/or the logic unit. This allows for a simple measurement of the full polarization state of the incoming radar signal.

The radar circuit may be configured to establish the absolute amplitude and phase of the incoming radar signal by coherently evaluating, for example by coherently adding, the first and second signal portions received at the at least one receive antenna. To this and, the radar circuit may be configured to measure amplitude and phase differences between the first and second signal portions. Corresponding processing instructions may be stored within the control unit of the radar circuit and/or within the logic unit.

The receive antenna or, in the case of an arrangement of multiple receive antennas, each receive antenna may be configured as a dual-port antenna that provides the first signal portion at a first signal port and the second signal portion at a second signal port. All receive antennas may receive with the same first receive polarization and/or with the same second receive polarization. Furthermore, the first transmit polarization of the transmit antenna may equal the first receive polarization of the receive antenna and/or the second transmit polarization of the transmit antenna may equal the second receive polarization of the receive antenna.

The first and second receive polarization of the receive antenna or of each individual receive antenna may be orthogonal. The receive polarizations may be linear, circular or elliptical polarizations. The individual receive antenna or each individual receive antenna may be configured to receive their respective first and second signal portions having a common phase center, wherein the common phase centers differ among the individual receive antennas. With common phase centers, the first and second signal portions are received at the same position at the individual receive antennas. This allows, for example, for unambiguous reconstruction of an angular position of detected target objects, for example for performing an angle-resolving MIMO function.

According to an embodiment, the radar circuit is configured to evaluate a multitude of individual incoming radar signals after reception by the at least one receive antenna and to measure the full polarization states of the individual incoming radar signals. To this end, corresponding processing instructions may be stored within the control unit of the radar circuit and/or within the logic unit. Furthermore, the radar circuit is configured to differentiate between the individual incoming radar signals, for example based on one or several signal parameters of the incoming radar signals, and the logic unit is configured to receive the information on the full polarization states of the incoming radar signals from the radar circuit. To this end, corresponding processing instructions may be stored within the control unit of the radar circuit and/or within the logic unit.

This allows for local determination of the transmit polarization state within a radar device of the radar system that comprises the antennas and the radar circuit. The signal parameters for differentiation may amount to the signal parameters mentioned above in connection with the weights of the individual polarization states of the incoming radar signals.

According to an embodiment, the logic unit is configured, for example by processing instructions stored within the logic unit, to receive the information on the full polarization state via a communication link from the at least one other radar device. This allows for the termination of the transmit polarization state without the need of measuring the polarization state of the incoming radar signal. The logic unit may be part of a radar device mounted to a vehicle and the communication link may be an inter-vehicle communication link between radar devices located in different vehicles.

According to an embodiment, the radar device is configured, for example by processing instructions stored within the control unit of the radar circuit and/or within the logic unit, to perform the receiving of the information on the full polarization state of the at least one incoming radar signal, the determining of the transmit polarization state and the adjusting of the polarization of the transmit radar signal repeatedly during operation of the radar system and to thereby adjust the polarization of the transmit radar signal to variations of the at least one incoming radar signal. This allows for flexible adaption of the ego polarization of the radar system in the presence of a dynamic traffic scene involving multiple radar devices that move with respect to each other.

In another aspect, the present disclosure is directed at a vehicle with an automotive radar system according to the present disclosure. The automotive radar system may comprise a radar device mounted to the vehicle, wherein the radar device comprises the transmit and receive antenna and the radar circuit. Furthermore, the logic unit may also be part of the radar device mounted to the vehicle. Alternatively, the logic unit may be connected to the radar device of the vehicle via a communication link.

Since the vehicle comprises the radar system according to the present disclosure, all embodiments and technical effects disclosed in connection with the radar system also apply to the vehicle according to the present disclosure and vice versa.

In yet another aspect, the present disclosure is directed at a method for operating an automotive radar system, wherein the radar system comprises at least one transmit antenna for illuminating target objects in a traffic scene with a transmit radar signal, at least one receive antenna for receiving target reflections of the transmit radar signal, and a radar circuit connected to the at least one transmit and receive antenna. The method thereby comprises:
- receiving information on a full polarization state of an incoming radar signal emitted by at least one other radar device located within the traffic scene;
- determining a transmit polarization state that has maximum isolation from the polarization state of the at least one incoming radar signal;
- adjusting a polarization of the transmit radar signal transmitted via the at least one transmit antenna to match the determined transmit polarization state.

The method may be performed with the radar system according to the present disclosure. Therefore, all embodiments and technical effects disclosed in connection with the radar system also apply to the method according to the present disclosure and vice versa.

### DRAWINGS

Exemplary embodiments and functions of the present disclosure are described herein in conjunction with the following drawings, showing schematically:
- Fig. 1: an automotive radar system according to the present disclosure;
- Fig. 2: a pair of transmit and receive antennas of the radar system together with a multitude of other radar devices;
- Fig. 3: a Poincare sphere with polarization states of radar signals emitted by the other radar devices;
- Fig. 4: a vehicle equipped with a radar system according to the present disclosure.

### DETAILED DESCRIPTION

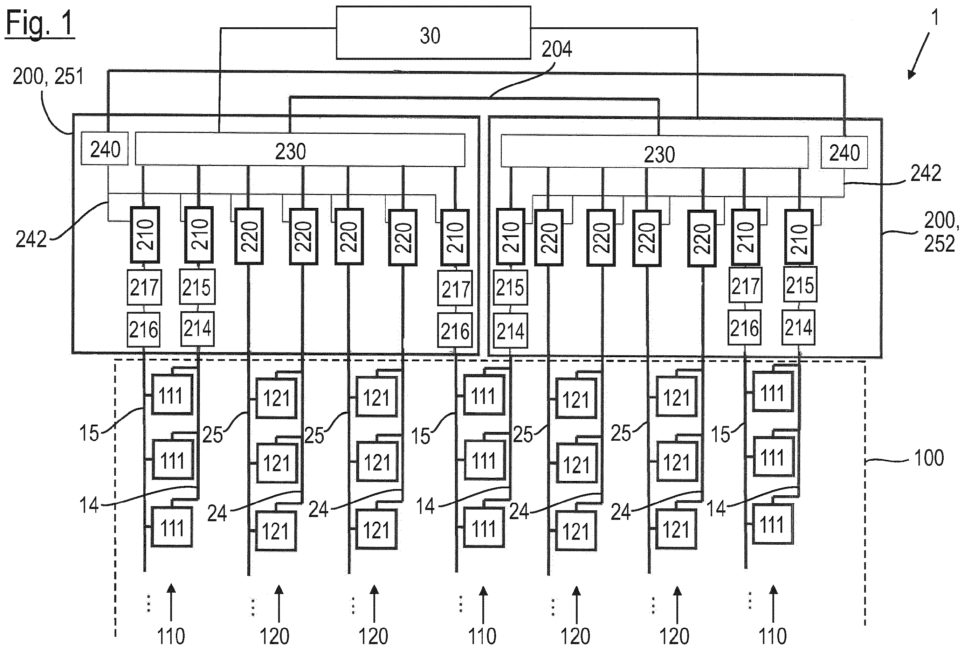

**Fig. 1** depicts an automotive radar system 1 having an antenna device 100 and a radar circuit 200. The antenna device 100 comprises an arrangement of transmit antennas 110 and an arrangement of receive antennas 120. The individual transmit antennas 110 and the individual receive antennas 120 are each configured as serially-fed patch antennas. Each transmit antenna 110 comprises an array of serially connected radiating patch elements 111 and each receive antenna 120 comprises an array of serially connected radiating patch elements 121.

Each transmit antenna 110 is a dual-polarized antenna that is configured to transmit a first transmit radar signal 14 with a first transmit polarization, namely with linear vertical polarization, and to transmit a second transmit radar signal 15 with a second transmit polarization, namely with linear horizontal polarization. The transmit antenna 110 receive the first and second radar signals 14, 15 from the radar circuit 200, whereby each transmit antenna 110 is a dual-port antenna that is configured to receive the first transmit radar signal 14 via a first antenna port and the second transmit radar signal 15 via a second antenna port.

Likewise, each receive antenna 120 is a dual-polarized antenna that is configured to separate incoming radar signals into a first signal portion 24 that corresponds to a component of the incoming radar signals having a first receive polarization, namely linear vertical polarization, and into a second signal portion 25 that corresponds to a component of the incoming radar signals having a second receive polarization, namely linear horizontal polarization. Furthermore, each receive antenna 120 is configured as a dual-port antenna that outputs the first signal portion 24 via a first antenna port and the second signal portion 25 via a second antenna port.

The radar circuit 200 comprises a first integrated circuit 251 and a second integrated circuit 252. Each integrated circuit 251, 252 comprises three transmit chains 210 and four receive chains 220. Every transmit antenna 110 is connected to two separate transmit chains 210, whereby one of the transmit chains 210 provides the first transmit radar signal 14 and the other one of the transmit chains 210 provides the second transmit radar signal 15 of the respective transmit antenna 110.

The individual transmit chains 210 generate the first and second transmit radar signals 14, 15 from a common oscillator signal 242 that is provided by a reference oscillator 240 of the respective integrated circuit 251, 252. The individual transmit chains 210 of the integrated circuits 251, 252 are controlled by respective control units 230 of the individual integrated circuits 251, 252. Thereby, the control units 230 control individual signal parameters of the first and second transmit radar signals 14, 15, such as frequency, amplitude, frequency chirp, burst timing or the like.

The first and second integrated circuits 251, 252 of the radar circuit 200 are synchronized and configured to coherently generate all first and second transmit radar signals 14, 15 output by the radar circuit 200. Coherent generation of the radar signals 14, 15 establishes well-defined and controllable phase relationships among the individual first and second transmit radar signals 14, 15. A synchronization mechanism of the first and second integrated circuit 251, 252 comprises exchanging a synchronization signal 202 for synchronizing the oscillators 240 of the integrated circuits 251, 252. Furthermore, the synchronization mechanism comprises a synchronization of the control units 230 via a trigger signal 204 to provide a common timing basis.

For each transmit antenna 110, the radar circuit 200 is configured to simultaneously transmit the respective first transmit radar signal 14 and the respective second transmit radar signal 15, so that each transmit antenna 110 transmits a transmit radar signal that is a coherent superposition of the respective first and second radar signal 14, 15. For adjusting the polarization of the transmit radar signals transmitted by the individual transmit antennas 110, the integrated circuits 251, 252 comprise, for each transmit antenna 110, a first phase shifter 214 and a first variable attenuator 215 that are located in a signal path connecting the transmit chain 210 that generates the respective first transmit radar signal 14 with the respective transmit antenna 110. Furthermore, the integrated circuits 251, 252 comprise, for each transmit antenna 110, a second phase shifter 216 and a second variable attenuator 217 that are located in a signal path connecting the transmit chain 210 that generates the respective second transmit radar signal 15 with the respective transmit antenna 110. By way of example, the phase shifters 214, 216 are configured as 6-bit phase shifters.

By adjusting the first and second phase shifters 214, 216 and the first and second variable attenuators 215, 216 connected to the same transmit antenna 110, the radar circuit 200 adjusts the relative phase offsets and amplitude differences of the first and second radar signal 14, 15 that are transmitted via the respective transmit antenna 110. In this way, the radar circuit 200 variably adjusts the polarization of the transmit radar signal transmitted by the respective transmit antenna 110. For example, by setting a relative phase offset of 0° and zero amplitude difference, the radar circuit 200 generates a transmit radar signal that has a polarization of 45°. Likewise by setting a relative phase offset of 90° and zero amplitude difference, the radar circuit 200 generates a transmit radar signal that has a circular polarization as resulting polarization.

The radar circuit 200 is further configured to coherently evaluate the first and second signal portions 24, 25 received from the individual receive antennas 120. Each receive antenna 120 is connected via its antenna ports to two receive chains 220 of the radar circuit 200. One of these receive chains 220 evaluates the first signal portion 24 and the other one of these receive chains 220 evaluates the second signal portion 25. For coherently evaluating the first and second signal portions 24, 25, the individual receive chains 220 mix and down-convert the received signal portions 24, 25 with the oscillator signal 242 provided by the synchronized oscillators 240 of the integrated circuits 251, 252. Furthermore, the receive chains 220 digitize the received signal portions 24, 25 for further signal processing and evaluation, for example after down-conversion. The receive chains 220 also condition the received signal portions 24, 25 via frequency filters and/or variable attenuators and/or phase shifters.

The radar device 1 is configured to determine absolute phase and amplitude values of the first and second signal portions 24, 25 evaluated by the individual receive chains 220. By coherently combining the first and second signal portions 24, 25 received via the same receive antenna 120, the radar device 1 reconstructs the full polarization state of incoming radar signals.

With alternative embodiments of the radar device 1, the radar circuit 200 may be configured as a single integrated circuit. Additionally or alternatively, the radar circuit 200 may comprise only one transmit chain 210 for each individual transmit antenna 110. In this case, each transmit chain 210 may generate a common feed signal that is subsequently split into the first and second transmit radar signal 14, 15 of the respective transmit antenna 110, for example by a power divider, such as a T-junction or Wilkinson power divider. These power dividers may be integral part of the integrated circuits 242, 252 of the radar circuit 200.

The radar device 1 further comprises a logic unit 30 that is connected to the control units 230 of the radar circuit 200 via communication connections. The logic unit 30 forms together with the radar circuit 200 and the antenna device 100 part of a radar device mountable to a vehicle.

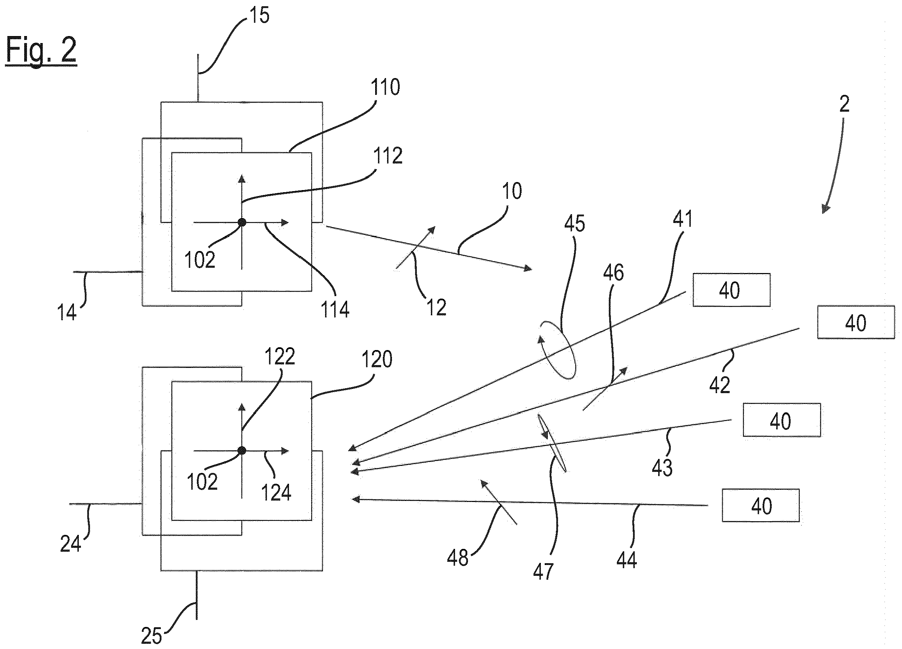

**Fig. 2** exemplarily depicts a radiating element 111 of one of the transmit antennas 110 and a radiating element 121 of one of the receive antennas 120 of the radar device 1. All other radiating elements 111 of the transmit antennas 110 are configured as it is disclosed for the transmit antenna 110 shown in Fig. 2 and all other radiating elements 121 of the receive antennas 120 of the radar system 1 are configured as it is disclosed for the receive antenna 120 shown in Fig. 2. The antennas 110, 120 are directed towards a traffic scene 2 that comprises several other radar devices 40.

The individual receive antennas 120 of the radar device 1 receive incoming radar signals 41, 42, 43, 44 that are emitted by the other radar devices 40 present in the traffic scene 2. For the traffic scene 2 depicted in Fig. 2, the receive antennas 120 receive a first incoming radar signal 41 having a first polarization state 45, a second incoming radar signal 42 having a second polarization state 46, a third incoming radar signal 43 having a third polarization state 47 and a fourth incoming radar signal 44 having a fourth polarization state 48. Thereby, the first polarization state 45 amounts to right-hand circular polarization, the second polarization state 46 to horizontal linear polarization, the third polarization state 47 to left-hand elliptical polarization and the fourth polarization state 48 to vertical linear polarization.

At the receive antennas 120, the incoming radar signals 41, 42, 43, 44 are decomposed into first signal portions 24 that correspond to polarization components of the radar signals 41, 42, 43, 44 having the first receive polarization 122, namely vertical linear polarization, and into second signal portions 25 that correspond to polarization components of the radar signals 41, 42, 43, 44 having the second receive polarization 124, namely horizontal linear polarization. The receive antennas 120 thereby receive the individual signal portions 24, 25 with a common phase center 102.

The receive antennas 120 are configured as dual-polarized differential patch antennas that have a set of first connection points located at opposite sides of the common phase center 102, the first connection points providing the first signal portion 24, and a set of second connection points located at opposite sides of the common phase center 102 and rotated by 90° with respect to the first connection points, the second connection points providing the second signal portion 25.

The individual transmit antennas 110 are also configured as dual-polarized differential patch antennas. Each transmit antenna 110 has a set of first connection points located at opposite sides of a common phase center 102 of the respective transmit antenna 110, the first connection points feeding the first transmit radar signals 14, and a set of second connection points located at opposite sides of the common phase center 102 and rotated by 90° with respect to the first connection points, the second connection points feeding the second transmit radar signals 15.

The control units 230 of the radar circuit 200 adjust the amplitudes and phases of first and second transmit radar signals 14, 15 fed to the individual transmit antennas 110 and thus a polarization 12 of the transmit radar signals 10 transmitted by the individual transmit antennas 110. The control units 230 thereby adjust the polarization 12 of the transmit radar signals 10 in a way to match a transmit polarization state that is provided by the logic unit 30 and maximizes isolation of the transmit polarization 12 from the polarization states 45, 46, 47, 48 of the incoming radar signals 41, 42, 43, 44.

To determine the transmit polarization state, the logic unit 30 receives information on the full polarization states 45, 46, 47, 48 of the incoming radar signals 41, 42, 43, 44 from the control units 230 that coherently evaluate the first and second signal portions 24, 25 obtained from the incoming radar signals 41, 42, 43, 44. The logic unit 30 determines a weighted average of the full polarization states 45, 46, 47, 48 and determines the transmit polarization state having maximum polarization isolation from this weighted average. Thereby, this transmit polarization state corresponds to a location on the Poincare sphere that maximizes a distance to the location of the weighted average of the polarization states 45, 46, 47, 48.

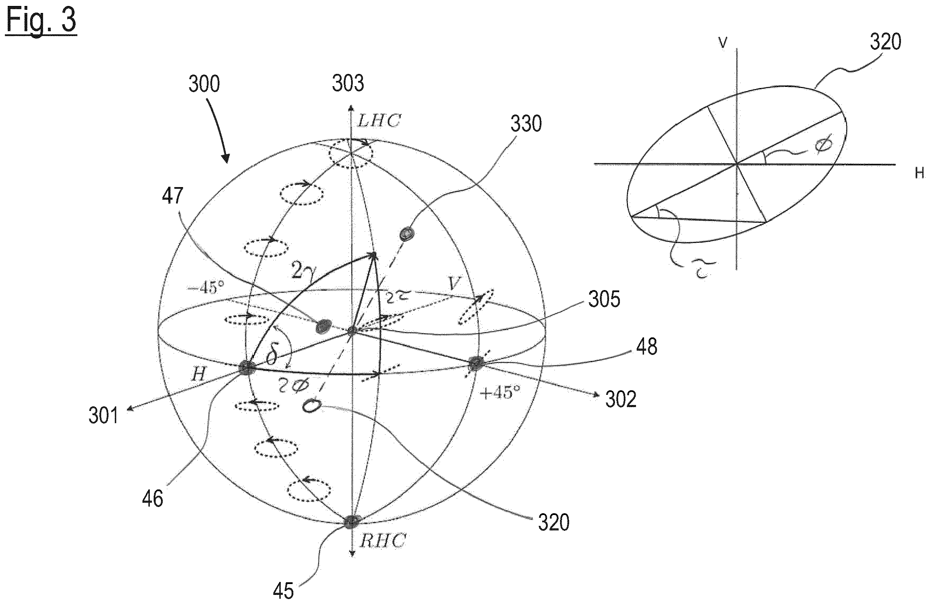

**Fig. 3** depicts the location of the full polarization states 45, 46, 47, 48 on a surface of the Poincare sphere 300. The Poincare sphere 300 is defined as the unit sphere in a coordinate system that is spanned by three orthogonal Stokes vectors, namely a first Stokes vector 301, a second Stokes vector 302 and a third Stokes vector 303. Locations that lie on opposite sides of the Poincare sphere 300 with respect to its center 305 represent orthogonal polarization states. The polar coordinates of a given polarization state on the Poincare sphere 300 are given by angles *φ* and *τ* that define the shape and orientation of the polarization ellipse 320 of the respective polarization state, as also depicted in Fig. 3. Thereby, *φ* denotes the orientation angle of the polarization ellipse and *τ* denotes its ellipticity.

The reference location 320 for determining the transmit polarization state 330 of the transmit radar signal 10 corresponds to the location of the weighted average of the polarization states 45, 46, 47, 48. The logic unit 30 then determines the transmit polarization state 330 in a way that the location of the transmit polarization state 330 on the Poincare sphere 300 is on the hemisphere that is opposite to the reference location 320. As depicted in Fig. 3, the location of the transmit polarization state 330 may be opposite to the reference location 320 with respect to the center 305 of the Poincare sphere 300.

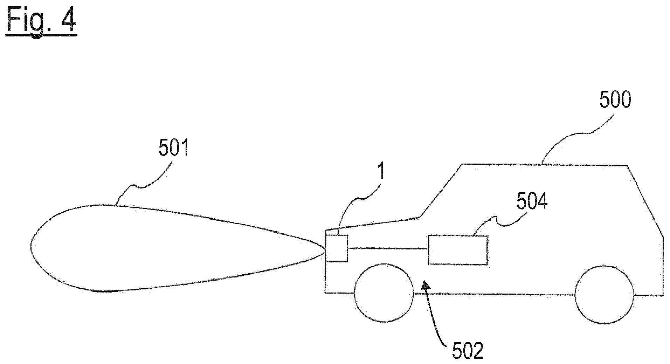

**Fig. 4** depicts a vehicle 500 that is equipped with a radar system 1 according to the present disclosure, whereby the entire radar system 1 is configured as a radar device mounted to the vehicle 500. With other embodiments, the logic unit 30 may be located separate from the radar device and the radar device may comprise the remaining components of the radar system 1. In the embodiment shown in Fig. 4, the radar system 1 is configured as a front radar of the vehicle 500 and a radiation field 501 of the antenna device of the radar system 1 is directed in the forward direction of the vehicle 500. The radar system 1 is part of a vehicle control system 502 of the vehicle 500 and is connected to a control device 504 of the vehicle control system 502. The control device 504 is configured to perform advanced driver's assist functions, such as adaptive cruise control, emergency brake assist, lane change assist or autonomous driving, based on data signals received from the radar system 1. These data signals represent the positions of target objects in front of the radar system 1 mounted to the vehicle 500. The control device 504 is configured to at least partly control the motion of the vehicle 500 based on the data signals received from the radar system 1. For controlling the motion of the vehicle, the control device 504 may be configured to brake and/or accelerate and/or steer the vehicle 500.

### Reference numeral list

- 1: radar system
- 2: traffic scene
- 10: radar signal
- 12: transmit polarization
- 14: first transm it radar signal
- 15: second transmit radar signal
- 24: first signal portion
- 25: second signal portion
- 30: logic unit
- 40: other radar device
- 41: first incoming radar signal
- 42: second incoming radar signal
- 43: third incoming radar signal
- 44: fourth incoming radar signal
- 45: first polarization state
- 46: second polarization state
- 47: third polarization state
- 48: fourth polarization state
- 100: antenna device
- 102: phase center
- 110: transm it antennas
- 111: transmit antenna elements
- 112: first transm it polarization
- 114: second transmit polarization
- 120: receive antennas
- 121: receive antenna elements
- 122: first receive polarization
- 124: second receive polarization
- 200: radar circuit
- 202: synchronization signal
- 204: trigger signal
- 210: transmit chain
- 214: first phase shifter
- 215: first variable attenuator
- 216: second phase shifter
- 217: second variable attenuator
- 220: receive chain
- 230: control unit
- 240: oscillator
- 242: oscillator signal
- 251: first integrated circuit
- 252: second integrated circuit
- 300: Poincare sphere
- 301: first Stokes vector
- 302: second Stokes vector
- 303: third Stokes vector
- 305: center
- 320: reference location
- 330: transmit polarization state
- 500: vehicle
- 501: radiation field
- 502: vehicle control system
- 504: vehicle control device

## Claims

1. Automotive radar system (1) for detecting target objects in a traffic scene (2),
wherein the radar system (1) comprises at least one transmit antenna (110) for illuminating the target objects with a transmit radar signal (10), at least one receive antenna (120) for receiving target reflections of the transmit radar signal (10), and a radar circuit (200) connected to the at least one transmit and receive antenna (110, 120),
wherein the transmit antenna (110) transmits the transmit radar signal (10) having variable polarization (12),
wherein a logic unit (30) of the radar system (1) receives information on a full polarization state (45, 46, 47, 48) of an incoming radar signal (41, 42, 43, 44) emitted by at least one other radar device (40) located within the traffic scene (2),
wherein the logic unit (30) determines a transmit polarization state (330) that has maximum isolation from the polarization state (45, 46, 47, 48) of the at least one incoming radar signal (41, 42, 43, 44),
wherein the radar circuit (200) adjusts a polarization (12) of the transmit radar signal (10) transmitted via the at least one transmit antenna (110) to match the determined transmit polarization state (330).

2. Radar system (1) according to claim 1,
wherein the logic unit (30) determines the transmit polarization state (330) such that a distance between a location of the transmit polarization (12) on the Poincare sphere (300) and a reference location (320) defined by the polarization state (45, 46, 47, 48) of the at least one incoming radar signal (41, 42, 43, 44) is maximized.

3. Radar system according to claim 2,
wherein the location of the transmit polarization state (330) and the reference location (320) lie opposite to each other on the Poincare sphere (300) with respect to the center (305) of the Poincare sphere (300).

4. Radar system (1) according to one of the preceding claims,
wherein the logic unit (30) receives information on full polarization states (45, 46, 47, 48) of a multitude of incoming radar signals (41, 42, 43, 44) that are emitted by multiple other radar devices (40) within the traffic scene (2), wherein the logic unit (30) determines the transmit polarization state (330) having maximum isolation from an entirety of the polarization states (45, 46, 47, 48) of the multitude of incoming radar signals (41, 42, 43, 44).

5. Radar system (1) according to claim 4,
wherein the maximum isolation from the entirety of the polarization states (45, 46, 47, 48) corresponds to a maximum isolation from an average of the polarization states of the incoming radar signals (41, 42, 43, 44).

6. Radar system (1) according to claim 5,
wherein the average is a weighted average,
wherein weights of the individual polarization states (45, 46, 47, 48) depend on one or several signal parameters of the incoming radar signals (41, 42, 43, 44),
the individual signal parameters comprising, for example, a frequency of the respective incoming radar signal (41, 42, 43, 44), a frequency difference between the respective incoming radar signal (41, 42, 43, 44) and the transmit radar signal (10), an amplitude of the respective incoming radar signal (41, 42, 43, 44), a bandwidth of the respective incoming radar signal (41, 42, 43, 44), a distance to the other radar device (40) emitting the respective incoming radar signal (41, 42, 43, 44), an angular position of the other radar device (40) emitting the respective incoming radar signal (41, 42, 43, 44), a velocity of the other radar device (40) emitting the respective incoming radar signal (41, 42, 43, 44) and a modulation scheme such as a frequency modulation, amplitude modulation, phase modulation or the like.

7. Radar system (1) according to one of the preceding claims,
wherein the transmit antenna (110) transmits the radar signal (10) as a coherent superposition of a first transmit radar signal (14) having a first transmit polarization (112) and a second transmit radar signal (15) having a second transmit polarization (114) that is different from the first transmit polarization (112),
wherein the radar circuit (200) adjusts the polarization (12) of the transmit radar signal (10) by coherently generating the first transmit radar signal (14) and the second transmit radar signal (15) and by simultaneously and coherently transmitting the first and second transmit radar signal (14, 15) via the transmit antenna (110).

8. Radar system (1) according to one of the preceding claims,
wherein the radar circuit (200) varies the transmit polarization (12) of the transmitted radar signal (10) between non-orthogonal transmit polarization states (330), for example between elliptic and linear polarization.

9. Radar system (1) according to one of the preceding claims,
wherein the radar circuit (200) evaluates the at least one incoming radar signal (41, 42, 43, 44) after reception by the at least one receive antenna (120),
wherein the radar circuit (200) measures the full polarization state (45, 46, 47, 48) of the at least one incoming radar signal (41, 42, 43, 44), wherein the logic unit (30) receives the information on the full polarization state (45, 46, 47, 48) from the radar circuit (200).

10. Radar system according to claim 9,
wherein the receive antenna (120) separates the incoming radar signal (41, 42, 43, 44) received from the at least one other radar device (40) into a first signal portion (24) having a first receive polarization (122) and into second signal portion (25) having a second receive polarization (124) that is different from the first receive polarization (122),
wherein the radar circuit (200) measures the full polarization state (45, 46, 47, 48) of the incoming radar signal (41, 42, 43, 44) by coherently evaluating the first and second signal portion (24, 25).

11. Radar system (1) according to one of claims 9 to 10,
wherein the radar circuit (200) evaluates a multitude of individual incoming radar signals (41, 42, 43, 44) after reception by the at least one receive antenna (120),
wherein the radar circuit (200) measures the full polarization states (45, 46, 47, 48) of the individual incoming radar signals (41, 42, 43, 44), wherein the radar circuit (200) differentiates between the individual incoming radar signals (41, 42, 43, 44), for example based on one or several signal parameters of the incoming radar signals (41, 42, 43, 44), wherein the logic unit (30) receives information on the full polarization states (45, 46, 47, 48) of the incoming radar signals (41, 42, 43, 44) from the radar circuit (200).

12. Radar system (1) according to one of the preceding claims,
wherein the logic unit (30) receives the information on the full polarization state (45, 46, 47, 48) of the at least one incoming radar signal (41, 42, 43, 44) via a communication link from the at least one other radar device (40).

13. Radar system (1) according to one of the preceding claims,
wherein the radar device (1) performs the receiving of the information on the full polarization state (45, 46, 47, 48) of the at least one incoming radar signal (41, 42, 43, 44), the determining of the transmit polarization state (330) and the adjusting of the polarization (12) of the transmit radar signal (10) repeatedly during operation of the radar system (1) and thereby adjusts the polarization (12) of the transmit radar signal (10) to variations of the at least one incoming radar signal (41, 42, 43, 44).

14. Vehicle (500) with an automotive radar system (1) according to one of the preceding claims.

15. Method for operating an automotive radar system (1),
wherein the radar system (1) comprises at least one transmit antenna (110) for illuminating target objects in a traffic scene (2) with a transmit radar signal (10), at least one receive antenna (120) for receiving target reflections of the transmit radar signal (10), and a radar circuit (200) connected to the at least one transmit and receive antenna (110, 120),
the method comprising:
- receiving information on a full polarization state (45, 46, 47, 48) of an incoming radar signal (41, 42, 43, 44) emitted by at least one other radar device (40) located within the traffic scene (2);
- determining a transmit polarization state (330) that has maximum isolation from the polarization state (45, 46, 47, 48) of the at least one incoming radar signal (41, 42, 43, 44);
- adjusting a polarization (12) of the transmit radar signal (10) transmitted via the at least one transmit antenna (110) to match the determined transmit polarization state (330).
